# EUROPÄISCHE PATENTANMELDUNG

(11) **EP 3 957 424 A1**
(43) Veröffentlichungstag der Anmeldung: **23.02.2022**
(21) Anmeldenummer: 20020378.4
(22) Anmeldetag: 21.08.2020
(51) Int. Cl.: B23K 1/00, B23K 11/00

(54) **VERFAHREN ZUR HERSTELLUNG EINES RIPPEN-PLATTEN-WÄRMETAUSCHERS, LÖTANORDNUNG UND RIPPEN-PLATTEN-WÄRMETAUSCHER**

(71) Anmelder: Linde GmbH, 82049 Pullach (DE)
(72) Erfinder: Hölzl, Reinhold, 82538 Geretsried (DE); Englert, Thomas, 82205 Gilching (DE); Pöllmann, Josef-Andreas, 81829 München (DE)
(74) Vertreter: Meilinger, Claudia Sabine

(57) **Zusammenfassung**

Die vorliegende Erfindung betrifft ein Verfahren (400) zur Herstellung eines Rippen-Platten-Wärmetauschers (100), bei dem zu verlötende Komponenten (3-8) des Rippen-Platten-Wärmetauschers (100) zumindest zum Teil mit Lot versehen und zueinander positioniert werden, und bei dem durch Erwärmen der zu verlötenden Komponenten (3-8) und des Lots Lötverbindungen zwischen den zu verlötenden Komponenten (2-8) hergestellt werden, Das Erwärmen der zu verlötenden Komponenten (3-8) und des Lots umfasst einen Wärmeeintrag über eine mittels eines Stromflusses durch die zu verlötenden Komponenten (2-8) und das Lot bewirkte Widerstandsbeheizung. Ebenfalls Gegenstand der Erfindung sind eine Lötanordnung (200, 300) zur Herstellung eines entsprechenden Rippen-Platten-Wärmetauschers (100) und ein entsprechend hergestellter Rippen-Platten-Wärmetauscher (100).

## Beschreibung

Die vorliegende Erfindung betrifft ein Verfahren zur Herstellung eines Rippen-Platten-Wärmetauschers, eine entsprechende Lötanordnung, sowie einen entsprechend hergestellten Rippen-Platten-Wärmetauscher gemäß den Oberbegriffen der unabhängigen Patentansprüche.

### Stand der Technik

Die vorliegende Erfindung betrifft gelötete Rippen-Platten-Wärmetauscher aus Aluminium (Brazed Aluminium Plate-Fin Heat Exchangers, PFHE; Bezeichnungen gemäß der deutschen und englischen Ausgabe der ISO 15547-2:3005), wie sie in einer Vielzahl von verfahrenstechnischen Anlagen bei unterschiedlichsten Drücken und Temperaturen eingesetzt werden. Entsprechende Wärmetauscher finden beispielsweise Anwendung bei der Tieftemperaturzerlegung von Luft, bei der Verflüssigung von Erdgas oder in Anlagen zur Herstellung von Ethylen. Ist nachfolgend verkürzend von einem "Wärmetauscher" oder "Plattenwärmetauscher" die Rede, sei hierunter stets ein entsprechender (hart-)gelöteter Rippen-Platten-Wärmetauscher aus Aluminium verstanden. Es versteht sich, dass "Aluminium" dabei auch eine Aluminiumlegierung bezeichnen kann.

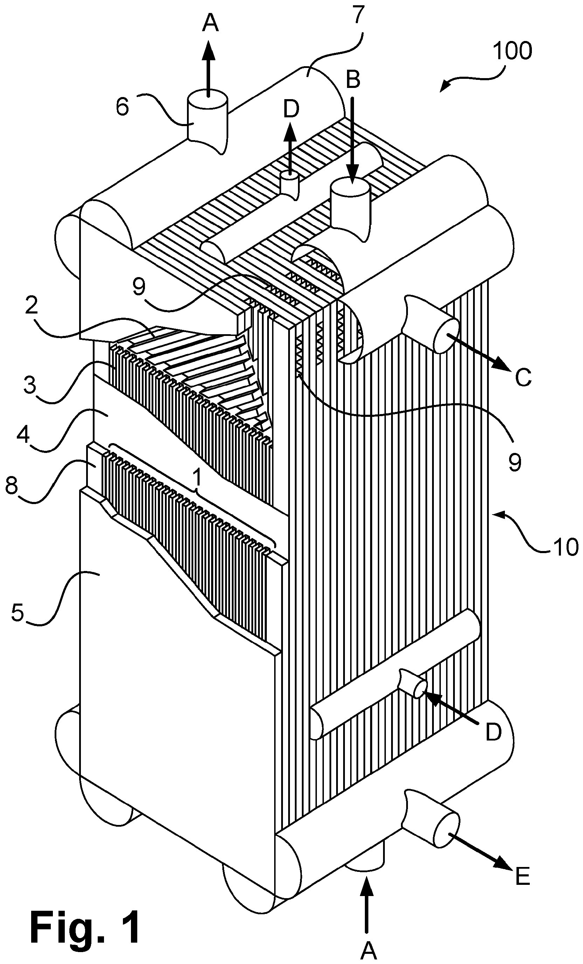

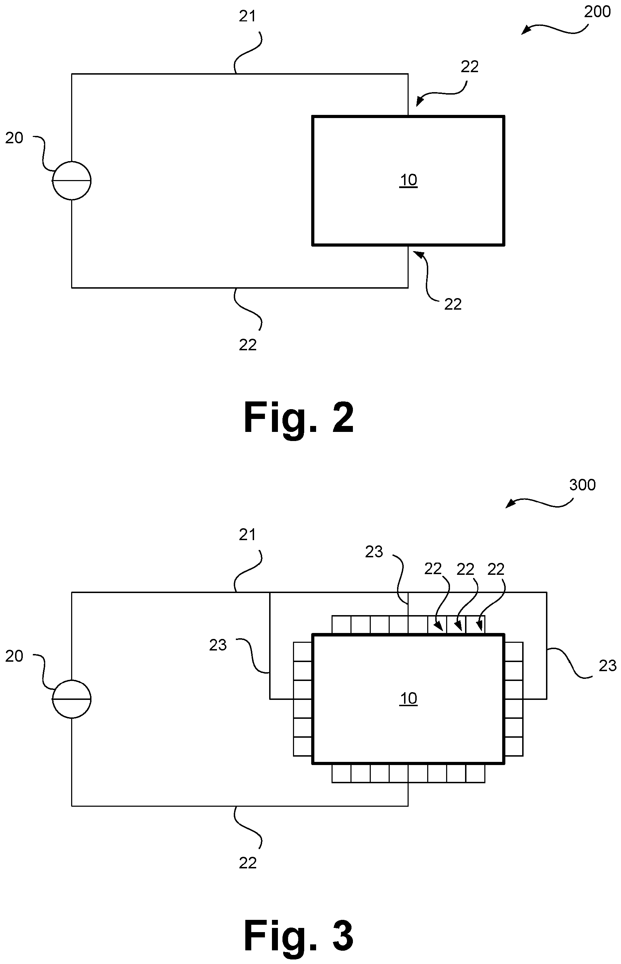

Gelötete Rippen-Platten-Wärmetauscher aus Aluminium sind in Figur 2 der erwähnten ISO 15547-2:3005 sowie auf Seite 5 der Veröffentlichung "The Standards of the Brazed Aluminium Plate-Fin Heat Exchanger Manufacturers' Association" der ALPEMA, 3. Auflage 2010, gezeigt und beschrieben. Eine Abbildung, die im Wesentlichen den dortigen Abbildungen entspricht, ist in der beigefügten Figur 1 dargestellt und wird im Folgenden vorab erläutert.

Der in Figur 1 teilweise eröffnet dargestellte Plattenwärmetauscher 100 dient dem Wärmeaustausch zwischen im dargestellten Beispiel fünf unterschiedlichen Prozessmedien A bis E.

Zum Wärmeaustausch zwischen den Prozessmedien A bis E umfasst der Plattenwärmetauscher 100 dabei eine Vielzahl von parallel zueinander angeordneten Trennblechen 4 (in den zuvor genannten Veröffentlichungen, auf die sich auch die nachfolgenden Angaben in Klammern beziehen, im Englischen als Parting Sheets bezeichnet), zwischen denen durch Strukturbleche 3 mit Lamellen (Fins) definierte Wärmeaustauschpassagen 1 für jeweils eines der Prozessmedien A bis E, die dadurch in Wärmeaustausch miteinander treten können, ausgebildet sind.

Die Strukturbleche 3 sind typischerweise gefaltet bzw. gewellt ausgebildet, wobei durch die Faltungen bzw. Wellen Strömungskanäle gebildet werden, wie auch in Figur 1 der ISO 15547-2:3005 gezeigt. Die Bereitstellung der Strukturbleche 3 bietet im Vergleich zu Plattenwärmetauschern ohne entsprechende Lamellen den Vorteil einer verbesserten Wärmeübertragung, einer gezielteren Fluidführung und einer Erhöhung der mechanischen (Zug-)Festigkeit. In den Wärmeaustauschpassagen 1 strömen die Prozessmedien A bis E insbesondere durch die Trennbleche 4 getrennt voneinander, können ggf. aber im Fall von perforierten Strukturblechen 3 durch letztere hindurchtreten.

Die einzelnen Passagen 1 bzw. die Strukturbleche 3 sind seitlich jeweils von sogenannten Sidebars 8 umgeben, die jedoch Einspeise- und Entnahmeöffnungen 9 freilassen. Die Sidebars 8 halten die Trennbleche 4 auf Abstand und sorgen für eine mechanische Verstärkung des Druckraumes. Zum Abschluss an zumindest zwei Seiten dienen insbesondere verstärkt ausgebildete Deckbleche 5 (Cap Sheets), die parallel zu den Trennblechen 4 angeordnet sind.

Mittels sogenannter Header 7, die mit Stutzen 6 (Nozzles) versehen sind, werden die Prozessmedien A bis E über die Einspeise- und Entnahmeöffnungen 9 zu- und abgeführt. Im Eingangsbereich der Passagen 1 befinden sich weitere Strukturbleche mit Verteilerlamellen 2 (Distributor Fins), die für eine gleichmäßige Verteilung auf die gesamte Breite der Passagen 1 sorgen. In Strömungsrichtung gesehen am Ende der Passagen 1 können sich weitere Strukturbleche mit Verteilerlamellen 2 befinden, die die Prozessmedien A bis E aus den Passagen 1 in die Header 7 führen, wo sie gesammelt und über die entsprechenden Stutzen 6 abgezogen werden.

Durch die Strukturbleche 3, die weiteren Strukturbleche mit den Verteilerlamellen 2, die Sidebars 8, die Trennbleche 4 und die Deckbleche 5 wird ein hier quaderförmiger Wärmetauscherblock 10 gebildet, wobei unter einem "Wärmetauscherblock" die genannten Elemente ohne die Header 7 und Stutzen 6 in einem miteinander verbundenem Zustand verstanden werden sollen. Wie in Figur 1 nicht veranschaulicht, kann der Plattenwärmetauscher 100 insbesondere aus Fertigungsgründen aus mehreren entsprechenden quaderförmigen und miteinander verbundenen Wärmetauscherblöcken 10 ausgebildet sein.

Entsprechende Plattenwärmetauscher 100 werden aus Aluminium hartgelötet. Die einzelnen Passagen 1, umfassend die Strukturbleche 3, die weiteren Strukturbleche mit den Verteilerlamellen 2, die Trennbleche 4, die Deckbleche 5 und die Sidebars 8 werden dabei aufeinander gestapelt bzw. entsprechend angeordnet und in einem Ofen erwärmt, wobei die Trennbleiche 4 mit Lot versehen sind. Auf den in dieser Weise hergestellten Wärmetauscherblock 10 werden die Header 7 und die Stutzen 6 aufgeschweißt. Die Header 7 werden typischerweise unter Verwendung von halbzylindrischen Strangpressprofilen hergestellt, die auf die erforderliche Länge gebracht und dann auf den Wärmetauscherblock 10 aufgeschweißt werden. Zu weiteren Details bezüglich bekannter Verfahren zur Herstellung von Plattenwärmetauschern sei beispielsweise auf die Veröffentlichung von W. Diery, "The Manufacture of Plate-Fin Heat Exchangers at Linde", Linde Reports on Science and Technology 37/1984, Seiten 24 bis 31, verwiesen.

Durch die Größe und Geometrie des Lötofens wird in einem derartigen Herstellungsverfahren auch die maximale Größe des Wärmetauscherblocks vorgegeben. Oft verlangen jedoch Prozesse eine größere Wärmeaustauschfläche und somit größere Wärmetauscherblöcke als in einem derartigen Ofen gefertigt werden können. Um diesen Anforderungen gerecht zu werden, wird auf Seite 6 unter 1.2.3 der vorgenannten ALPEMA-Veröffentlichung vorschlagen, zwei oder mehrere Wärmetauscherblöcke durch Schweißen miteinander zu verbinden, um damit einen zusammengesetzten Wärmetauscherblock mit erhöhter Stapelhöhe zu erhalten.

Der soeben angesprochene Prozess des Lötens von Plattenwärmeaustauschen ist vergleichsweise komplex. Der Lötprozess in dem erwähnten Ofen erfolgt typischerweise durch Aufheizen mit Heizstrahlern im Vakuum. Die Wärmeführung erfolgt auf der Basis der Gesetzmäßigkeiten der Wärmestrahlung durch Beheizung der Außenflächen des Wärmetauscherblocks 10. Das Blockinnere wird daher herkömmlicherweise im Wesentlichen durch Wärmeleitung erwärmt.

Die vorliegende Erfindung stellt sich die Aufgabe, die Herstellung eines Rippen-Platten-Wärmetauschers zu verbessern und einen Rippen-Platten-Wärmetauscher mit verbesserten Eigenschaften zu erhalten.

### Offenbarung der Erfindung

Vor diesem Hintergrund schlägt die Erfindung ein Verfahren zur Herstellung eines Rippen-Platten-Wärmetauschers, eine entsprechende Lötanordnung, sowie einen entsprechend hergestellten Rippen-Platten-Wärmetauscher mit den jeweiligen Merkmalen der unabhängigen Patentansprüche vor. Ausgestaltungen sind jeweils Gegenstand der abhängigen Patentansprüche und der nachfolgenden Beschreibung.

Durch den Einsatz der vorliegenden Erfindung ergibt sich gegenüber dem eingangs erwähnten Verlöten von Elementen eines Plattenwärmetauschers mittels Heizstrahlern im Vakuum eine Reihe von Vorteilen. Die vorliegende Erfindung schlägt dabei vor, zumindest einen Teil der Komponenten eines Plattenwärmetauschers, insbesondere des Wärmetauscherblocks, durch Widerstandslöten zu verbinden.

Beim Löten handelt es sich gemäß Kapitel 4, "Löten", in H.J. Fahrenwaldt, V. Schuler, J. Twrdek, "Praxiswissen Schweißtechnik", Springer Fachmedien, Wiesbaden 2014, und der einschlägigen DIN ISO 857-2 um einen Fügeprozess, bei dem die zu verbindenden Grundwerkstoffe anders als beim Schweißen nicht aufgeschmolzen werden. Es entsteht ebenfalls eine unlösbare Verbindung durch das Aufschmelzen eines Zusatzes, dem Lot, gegebenenfalls mit Hilfe von Flussmitteln. Die Einteilung der Lötprozesse erfolgt nach unterschiedlichen Prinzipien. Hart- und Weichlöten unterscheiden sich im Wesentlichen durch die Liquidustemperatur des Lots, die beim Weichlöten bei unter 450 °C, beim Hartlöten dagegen bei über 450 °C liegt. Beim sogenannten Hochtemperaturlöten kommen Temperaturen von mehr als 900 °C zum Einsatz. Beim Hart- und Weichlöten kann das Lot mittels elektrischen Stroms erfolgen, wobei das Widerstandsweich- und -hartlöten grundsätzlich bekannt sind.

Beim Widerstandslöten werden die zu verlötenden Komponenten und das Lot von einem Strom durchflossen, wobei typischerweise durch das verwendete Lot (und ggf. das verwendete Flussmittel) sichergestellt wird, dass der elektrische Widerstand an der Lötstelle am größten ist. Beim Widerstandslöten entstehen stoffschlüssige Fügeverbindungen ohne nennenswerte Gefügeumwandlung. Das Widerstandslöten erfolgt gezielt, so dass benachbarte Bereiche der Lötstelle nur wenig thermisch beeinflusst werden und Werkstoffschädigungen vermieden werden.

Insgesamt schlägt die vorliegende Erfindung dabei ein Verfahren zur Herstellung eines Rippen-Platten-Wärmetauschers vor, bei den zu verlötende Komponenten des Rippen-Platten-Wärmetauschers zumindest zum Teil mit Lot versehen und zueinander positioniert werden. Spezifisch im Rahmen der vorliegenden Erfindung verlötbare Komponenten werden weiter unten erläutert. Die Positionierung erfolgt insbesondere in Form eines Aufeinanderstapelns und einer entsprechenden Sicherung gegen Verrutschen oder durch das Aufschmelzen des Lots induzierte Bewegungen. Die Positionierung kann insbesondere auch ein Aufeinanderpressen der zu verlötenden Komponenten des Rippen-Platten-Wärmetauschers umfassen. Beliebige Positionierungs-, Sicherungs- und Verpressmittel wie Zwingen, Klammern, temporäre Verlötungen oder Verschweißungen, Formen, Gerüste und dergleichen können im Rahmen der vorliegenden Erfindung verwendet werden. Bei dem Lot kann es sich um Hart- oder Weichlot handeln. Das Versehen der zu verlötenden Komponenten des Rippen-Platten-Wärmetauschers mit Lot kann insbesondere auch den Auftrag von Flussmittel umfassen. Lot und Flussmittel können gezielt ausgewählt werden, um einen bestimmten Widerstand an der Lötstelle - gegenüber den typischerweise hoch leitfähigen zu verlötenden Komponenten - einzustellen bzw. zu erhalten.

Wie beim Verlöten entsprechender Komponenten eines Rippen-Platten-Wärmetauschers üblich, werden auch im Rahmen der vorliegenden Erfindung durch ein Erwärmen der zu verlötenden Komponenten und des Lots Lötverbindungen zwischen den zu verlötenden Komponenten hergestellt. Erfindungsgemäß umfasst das Erwärmen der zu verlötenden Komponenten und des Lots einen Wärmeeintrag über eine mittels eines Stromflusses durch die zu verlötenden Komponenten und das Lot bewirkte Widerstandsbeheizung. Mit anderen Worten werden die zu verlötenden Komponenten des Rippen-Platten-Wärmetauschers im Rahmen der vorliegenden Erfindung also durch Widerstandslöten miteinander verbunden.

Weil das Aufheizen in herkömmlichen Verfahren zum Verlöten von Komponenten eines Rippen-Platten-Wärmetauschers nur von außen durch die verwendeten Heizstrahler im Lötofen möglich ist, ergeben sich hierbei unter anderem Probleme dadurch, dass die Emissivität der bestrahlten Oberflächen ist nicht immer gleich ist und stark von der Oberflächenrauhigkeit, der Sauberkeit und dem Grad der Oxidierung abhängt. Diese Probleme treten beim erfindungsgemäß vorgeschlagenen Widerstandslöten nicht auf. Durch die gezielte Einbringung von Wärme in die Lötstellen beim Widerstandslöten ergibt sich erfindungsgemäß eine sehr viel raschere Aufheizung, wohingegen die Wärmeleitung in das Blockinnere hinein bis zu Temperaturausgleich in herkömmlichen Verfahren typischerweise mehrere Stunden in Anspruch nimmt und die Wärmeleitung in Stapelrichtung des Wärmetauscherblocks in Verbindung mit Oxidschichten und Oberflächenrauhigkeiten den Vorgang herkömmlicherweise zusätzlich verzögert. Durch die Aufheizung nur von außen in herkömmlichen Verfahren entstehen zum Teil erhebliche Temperaturunterschiede vom Rand zum Inneren. In Verbindung mit der thermischen Ausdehnung kann es so zu unerwünschten Relativbewegungen innerhalb des Wärmetauscherblocks kommen, die die gewünschte Struktur des Wärmetauscherblocks beeinträchtigen kann. Auch derartige Nachteile werden durch den Einsatz der vorliegenden Erfindung vermieden.

Durch den elektrischen Stromfluss beim Widerstandslöten kann der Wärmetauscherblock nicht nur von außen, sondern über seinen gesamten Querschnitt, also auch im Inneren, nahezu zeitgleich erwärmt werden. Dadurch werden thermische Relativbewegungen durch die Wärmedehnung reduziert bzw. minimiert. Durch die gleichmäßigere Aufheizung ist eine deutliche Steigerung der Lötqualität erzielbar. Auch die bisherigen Abmessungen von einzelnen Wärmetauscherblöcken, die herkömmlicherweise durch die Dimensionierung der Lötöfen beschränkt ist, können im Rahmen der vorliegenden Erfindung vergrößert werden.

Insgesamt kann durch den Einsatz der vorliegenden Erfindung eine Optimierung der Festigkeit des Rippen-Platten-Wärmetauschers bzw. des Wärmetauscherblocks, insbesondere durch die Erzielung gleichförmigerer Temperaturverteilungen, erzielt werden, und es ergeben sich Energie- und damit Kosteneinsparungen beim Löten durch Reduktion der Aufheizzeit beim Löten. Durch den Einsatz der vorliegenden Erfindung lassen sich ferner Schäden bei der Druckprobe vermeiden.

Grundsätzlich können im Rahmen der vorliegenden Erfindung sämtliche üblichen Komponenten eines Rippen-Platten-Wärmetauschers, also Strukturbleche, Trennbleche, Deckbleche, Stutzen, Header und Sidebars, oder ein Teil entsprechender Komponenten, miteinander verlötet werden. Auch das herkömmlicherweise erfolgende nachträgliche Aufschweißen von Headern kann also ggf. im Rahmen der vorliegenden Erfindung in einem Verfahrensschritt durch Widerstandslöten erfolgen. Insbesondere werden im Rahmen der vorliegenden Erfindung jedoch Strukturbleche, Trennbleche, Deckbleche und Sidebars als die zu verlötenden Komponenten zu einem Wärmetauscherblock angeordnet und durch Widerstandslöten verbunden, und nach dem Verlöten der zu verlötenden Komponenten werden wie üblich die Header auf den Wärmetauscherblock aufgebracht. Hierdurch können herkömmliche Verfahrensabläufe, bis auf das erfindungsgemäße Herstellen des Wärmetauscherblocks durch Widerstandslöten, weitgehend beibehalten werden.

Im Rahmen der vorliegenden Erfindung können für die Widerstandsbeheizung elektrische Anschlüsse einer oder mehrerer Stromquellen an einer oder mehreren Verbindungspositionen mit den zu verlötenden Komponenten verbunden werden. Werden mehrere Verbindungspositionen, insbesondere eine Vielzahl von Verbindungspositionen, geschaffen, kann das Anlegen des Stroms nicht nur beispielsweise von zwei gegenüberliegenden Außenflächen, sondern von allen Außenflächen (oder auch nur in Längs -oder Querrichtung) erfolgen. Dadurch kann beispielsweise der Einfluss der schlechteren Wärmeleitung in Stapelrichtung umgangen oder zumindest reduziert werden. Durch die Verwendung mehrerer Stromquellen oder unterschiedliche Anschlüsse können auch, ggf. in zeitlicher Abfolge, unterschiedliche Stromstärken verwendet werden, so dass sich eine besonders gezielte Wärmeeinbringung erzielen lässt.

Jederzeit ist es in dem erfindungsgemäßen Verfahren möglich, falls erforderlich eine Zusatzbeheizung mittels eines oder mehrerer Wärmestrahler oder anderer Heizeinrichtungen vorzunehmen, beispielsweise um Temperaturgradienten weiter auszugleichen oder den Wärmeeintrag zu erhöhen. Hierbei lassen sich beispielsweise vorhandene Heizeinrichtungen in Lötöfen weiter nutzen.

Im Rahmen der vorliegenden Erfindung können die zu verlötenden Komponenten im Vakuum (d.h. auf einem unteratmosphärischen Druckniveau) oder bei Atmosphärendruck der Widerstandsbeheizung unterworfen werden, sofern eine Sauerstofffreiheit sichergestellt werden kann. Insbesondere dann, wenn die zu verlötenden Komponenten im Vakuum der Widerstandsbeheizung unterworfen werden, können bei einer Umrüstung vorhandener Lötöfen zum Einsatz in der vorliegenden Erfindung diese, bzw. die vorhandenen Einrichtungen zum Aufbau des Vakuums, weiter genutzt werden. Dies gilt auch beispielsweise für eine Ausgestaltung der vorliegenden Erfindung, in der die zu verlötenden Komponenten und das Lot der Widerstandsbeheizung unter einem Schutzgas unterworfen werden.

Insbesondere können im Rahmen der vorliegenden Erfindung Materialien oder Materialstärken der zu verlötenden Komponenten, das Lot oder ein verwendetes Flussmittel in Abhängigkeit von einem zu erzielenden Widerstand ausgewählt werden, insbesondere derart, dass der elektrische Widerstand und damit die Aufheizung an oder in der Nähe der Lötstelle maximal ist.

Die Erfindung betrifft ferner eine Lötanordnung zur Herstellung eines Rippen-Platten-Wärmetauschers aus zu verlötenden Komponenten, umfassend die zueinander positionierten und zumindest teilweise mit Lot versehenen, zu verlötenden Komponenten und eine Heizeinrichtung zur Erwärmung der zu verlötenden Komponenten und des Lots, um durch die Erwärmung Lötverbindungen zwischen den zu verlötenden Komponenten herzustellen. Erfindungsgemäß ist die Heizeinrichtung zumindest auch zur elektrischen Widerstandsbeheizung der zu verlötenden Komponenten mittels eines Stromflusses durch die zu verlötenden Komponenten eingerichtet. Die Lötanordnung kann in einem Lötofen, beispielsweise zur Bereitstellung eines Vakuums oder einer Schutzgasatmosphäre, untergebracht sein oder einen solchen Lötofen umfassen.

In der Lötanordnung kann die Heizeinrichtung über Stromanschlüsse an Verbindungspositionen, insbesondere an einer Vielzahl von Verbindungspositionen, mit den zu verlötenden Komponenten verbunden sein.

Der erfindungsgemäß vorgeschlagene Rippen-Platten-Wärmetauscher weist mittels Lot miteinander verlötete Komponenten auf und zeichnet sich erfindungsgemäß insbesondere dadurch aus, dass die verlöteten Komponenten durch ein Erwärmen der zu verlötenden Komponenten und des Lots, umfassend einen Wärmeeintrag über eine mittels eines Stromflusses durch die zu verlötenden Komponenten und das Lot bewirkte Widerstandsbeheizung, miteinander verlötet sind. Er unterscheidet sich von bekannten Rippen-Platten-Wärmetauschern insbesondere durch die Art und die Eigenschaften des verwendeten Lots, insbesondere dessen Schmelzpunkt.

Zu weiteren Merkmalen und Vorteilen der vorgeschlagenen Lötanordnung und des erfindungsgemäß bereitgestellten Rippen-Platten-Wärmetauschers und jeweils bevorzugter Ausgestaltungen hiervon sei auf die obigen, das erfindungsgemäße Verfahren und seine Ausgestaltungen betreffenden Erläuterungen verwiesen. Der erfindungsgemäß bereitgestellte Rippen-Platten-Wärmetauscher kann insbesondere durch ein entsprechend ausgestaltetes Verfahren hergestellt sein.

Die Erfindung wird nachfolgend unter Bezugnahme auf die beigefügten Zeichnungen näher erläutert, welche die vorliegende Erfindung und ihre Merkmale gegenüber dem Stand der Technik veranschaulichen.

### Kurze Beschreibung der Zeichnungen

Figur 1 zeigt einen gemäß einer Ausgestaltung der Erfindung herstellbaren Rippen-Platten-Wärmetauscher in vereinfachter isometrischer Darstellung.
Figur 2 veranschaulicht eine gemäß einer Ausgestaltung der Erfindung einsetzbare Lötanordnung in vereinfachter Darstellung.
Figur 3 veranschaulicht eine gemäß einer Ausgestaltung der Erfindung einsetzbare Lötanordnung in vereinfachter Darstellung.
Figur 4 veranschaulicht ein Verfahren gemäß einer Ausgestaltung der Erfindung in Form eines schematischen Ablaufplans.

### Ausführungsform(en) der Erfindung

Figur 1 wurde bereits in der Beschreibungseinleitung bei der Würdigung des Standes der Technik erläutert. Die dort verwendeten Bezugszeichen und Erläuterungen gelten auch für die nachfolgend erläuterten Figuren.

Figur 2 zeigt eine Lötanordnung 200 mit einer Stromquelle 20, die über Stromanschlüssen 21 und zwei Verbindungspositionen 22 an einen Wärmetauscherblock 10 mit Komponenten wie Strukturblechen 3, Trennblechen 4, Deckblechen 5 und Sidebars 8, insbesondere in stapelförmiger Anordnung wie in Figur 1 veranschaulicht oder vergleichbarer Art und mit Lot versehen, angeschlossen ist. Die Widerstands-Lötanordnung 200 kann insbesondere in einem nicht gesondert veranschaulichten Lötofen angeordnet sein bzw. einen solchen Lötofen umfassen. Wie erwähnt, können insbesondere dann, wenn die zu verlötenden Komponenten des Wärmetauscherblocks 10 im Vakuum der Widerstandsbeheizung unterworfen werden, bei einer Umrüstung vorhandener Lötöfen zum Einsatz in der vorliegenden Erfindung diese, bzw. die Einrichtungen zum Aufbau des Vakuums, weiter genutzt werden.

Während in der Lötanordnung 200 gemäß Figur 2 eine Stromeinbringung über die Stromanschlüsse 21 und zwei Verbindungspositionen 22 insbesondere in Stapelrichtung des Wärmetauscherblocks 10 erfolgt, zeigt Figur 3 eine Widerstands-Lötanordnung 300 mit Stromquelle 20, Stromanschlüssen 21 und einer Vielzahl von geschaffenen Verbindungspositionen 22 mit dem Wärmetauscherblock 10, zu denen Verzweigungen 23 der Stromanschlüsse führen. Wie erwähnt, kann dann, wenn eine Vielzahl von Verbindungspositionen geschaffen wird, das Anlegen des Stroms beispielsweise nicht nur von zwei gegenüberliegenden Außenflächen, sondern von allen Außenflächen (oder auch nur in Längs -oder Querrichtung) des Wärmetauscherblocks 10 erfolgen. Dadurch kann der Einfluss der schlechteren Wärmeleitung in Stapelrichtung umgangen oder zumindest reduziert werden.

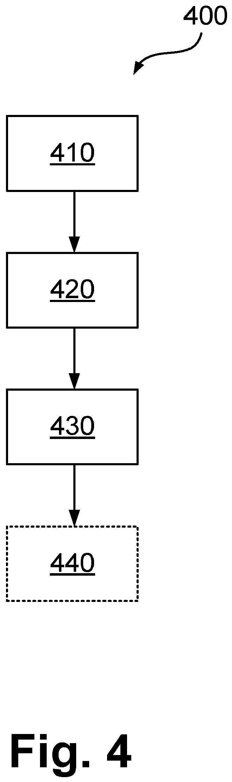

In Figur 4 ist ein Verfahren 400 gemäß einer Ausgestaltung der Erfindung in Form eines vereinfachten schematischen Ablaufplans dargestellt. Dieses umfasst das Anordnen 410 und ggf. Fixieren der mit Lot versehenen, zu verlötenden Komponenten, ein Anschließen 420 der gebildeten Einheit an eine oder mehrere Stromquellen, eine Strombeaufschlagung 430 und damit ein Verlöten der zu verlötenden Komponenten, sowie optional ein anschließendes Aufschweißen 440 von weiteren Komponenten wie beispielsweise Headern und dergleichen.

## Patentansprüche

1. Verfahren (400) zur Herstellung eines Rippen-Platten-Wärmetauschers (100), bei den zu verlötende Komponenten (3-8) des Rippen-Platten-Wärmetauschers (100) zumindest zum Teil mit Lot versehen und zueinander positioniert werden, und bei dem durch Erwärmen der zu verlötenden Komponenten (3-8) und des Lots Lötverbindungen zwischen den zu verlötenden Komponenten (2-8) hergestellt werden, **dadurch gekennzeichnet, dass** das Erwärmen der zu verlötenden Komponenten (3-8) und des Lots einen Wärmeeintrag über eine mittels eines Stromflusses durch die zu verlötenden Komponenten (2-8) und das Lot bewirkte Widerstandsbeheizung umfasst.

2. Verfahren (400) nach Anspruch 1, bei dem die zu verlötenden Komponenten (3-8) ausgewählt sind aus Strukturblechen (3), Trennblechen (4), Deckblechen (5), Stutzen (6), Headern (7) und Sidebars (8).

3. Verfahren (400) nach Anspruch 1, bei dem Strukturbleche (3), Trennbleche (4), Deckbleche (5) und Sidebars (8) als die zu verlötenden Komponenten (3-5, 8) zu einem Wärmetauscherblock (10) angeordnet werden, und bei dem nach dem Verlöten der zu verlötenden Komponenten (3-5, 8) Headern (7) auf den Wärmetauscherblock (10) aufgebracht werden.

4. Verfahren (400) nach einem der vorstehenden Ansprüche, bei dem für die Widerstandsbeheizung elektrische Anschlüsse (21) einer oder mehrerer Stromquellen (20) an einer oder mehreren Verbindungspositionen (22) mit den zu verlötenden Komponenten (3-8) verbunden werden.

5. Verfahren (400) nach einem der vorstehenden Ansprüche, bei dem eine Zusatzbeheizung mittels eines oder mehrerer Wärmestrahler vorgenommen wird.

6. Verfahren (400) nach einem der vorstehenden Ansprüche, bei dem die zu verlötenden Komponenten (3-8) und das Lot im Vakuum oder bei Atmosphärendruck der Widerstandsbeheizung unterworfen werden.

7. Verfahren (400) nach einem der vorstehenden Ansprüche, bei dem die zu verlötenden Komponenten (3-8) und das Lot der Widerstandsbeheizung unter einem Schutzgas unterworfen werden.

8. Verfahren (400) nach einem der vorstehenden Ansprüche, bei dem Materialien oder Materialstärken der zu verlötenden Komponenten (3-8), das Lot und/oder ein verwendetes Flussmittel in Abhängigkeit von einem zu erzielenden Widerstand ausgewählt werden.

9. Lötanordnung (200, 300) zur Herstellung eines Rippen-Platten-Wärmetauschers (100) aus zu verlötenden Komponenten (3-8), umfassend die zueinander positionierten und zumindest teilweise mit Lot versehenen, zu verlötenden Komponenten (3-8) und eine Heizeinrichtung zur Erwärmung der zu verlötenden Komponenten (3-8) und des Lots, um durch die Erwärmung Lötverbindungen zwischen den zu verlötenden Komponenten (2-8) herzustellen, **dadurch gekennzeichnet, dass** die Heizeinrichtung zur elektrischen Widerstandsbeheizung der zu verlötenden Komponenten (2-8) mittels eines Stromflusses durch die zu verlötenden Komponenten (2-8) eingerichtet ist.

10. Lötanordnung (200, 300) nach Anspruch 9, bei der die Heizeinrichtung über Stromanschlüsse (21) an Verbindungspositionen (22) mit den zu verlötenden Komponenten (3-8) verbunden ist.

11. Rippen-Platten-Wärmetauscher (100), der mittels Lot miteinander verlötete Komponenten (3-8) aufweist, **dadurch gekennzeichnet, dass** die verlöteten Komponenten (3-8) durch ein Erwärmen der zu verlötenden Komponenten (3-8) und des Lots, umfassend einen Wärmeeintrag über eine mittels eines Stromflusses durch die zu verlötenden Komponenten (2-8) und das Lot bewirkte Widerstandsbeheizung, miteinander verlötet sind.

12. Rippen-Platten-Wärmetauscher (100) nach Anspruch 11, der durch ein Verfahren gemäß einem der Ansprüche 1 bis 8 hergestellt ist.
